# EUROPEAN PATENT APPLICATION

(11) **EP 4 512 841 A1**
(43) Date of publication of application: **26.02.2025**
(21) Application number: 23791774.5
(22) Date of filing: 13.04.2023
(51) Int. Cl.: C08G 18/75, C08G 18/10, C08G 18/32, C08G 18/38, C08G 18/42, C08G 18/48

(54) **POLYURETHANE RESIN, ELASTIC MOLDED ARTICLE, AND METHOD FOR PRODUCING POLYURETHANE RESIN**

(30) Priority: 19.04.2022 JP 2022068755
(71) Applicant: Mitsui Chemicals, Inc., Tokyo 104-0028 (JP)
(72) Inventor: MAEKAWA, Kazuhiro, Sodegaura-shi, Chiba 299-0265 (JP)
(74) Representative: Hoffmann Eitle
(86) International application number: PCT/JP2023/014970
(87) International publication number: WO 2023/204126

(57) **Abstract**

A polyurethane resin of the present invention includes a reaction product of a polyisocyanate component and a chain extending component, and the polyisocyanate component consists of a prepolymer composition including an isocyanate group-terminated prepolymer and a free polyisocyanate monomer; the isocyanate group-terminated prepolymer includes the reaction product of a bis(isocyanatomethyl)cyclohexane and a macropolyol having a number average molecular weight of 800 or more and 1800 or less; the isocyanate group concentration of the prepolymer composition is above 12% by mass and below 20% by mass; and the chain extending component is an aromatic diamine compound.

## Description

### TECHNICAL FIELD

The present invention relates to a polyurethane resin, an elastic molded article, and a method for producing a polyurethane resin.

### BACKGROUND ART

Recently, a polyurethane resin has been used as a member of various industrial devices such as polishing pads.

As such a polyurethane resin, for example, a polyurethane elastomer obtained by a reaction of an isocyanate group-terminated prepolymer (isocyanate group content of 6.06% by mass) obtained by a reaction of a 1,4-bis(isocyanatomethyl)cyclohexane with a high molecular weight polyol (polytetramethylene ether glycol) with a chain extender including an active hydrogen group (3,3'-dichloro-4,4'-diphenylmethanediamine) has been proposed (ref: for example, Patent Document 1).

### Citation List

### Patent Document

Patent Document 1: Japanese Unexamined Patent Publication No. 2014-231585

### SUMMARY OF THE INVENTION

### PROBLEM TO BE SOLVED BY THE INVENTION

However, when the above-described polyurethane elastomer (polyurethane resin) described in Patent Document 1 is, for example, used as a polishing pad, durability may not be sufficient.

The present invention provides a polyurethane resin capable of improving durability, an elastic molded article, and a method for producing a polyurethane resin.

### MEANS FOR SOLVING THE PROBLEM

The present invention [1] includes a polyurethane resin including a reaction product of a polyisocyanate component and a chain extending component, wherein the polyisocyanate component consists of a prepolymer composition including an isocyanate group-terminated prepolymer and a free polyisocyanate monomer; the isocyanate group-terminated prepolymer includes the reaction product of a bis(isocyanatomethyl)cyclohexane and a macropolyol having a number average molecular weight of 800 or more and 1800 or less; the isocyanate group concentration of the prepolymer composition is above 12% by mass and below 20% by mass; and the chain extending component is an aromatic diamine compound.

The present invention [2] includes the polyurethane resin described in the above-described [1], wherein the aromatic diamine compound includes at least one kind selected from the group consisting of 3,3'-dichloro-4,4'-diphenylmethanediamine, dimethylthiotoluenediamine, 4,4'-methylenebis(3-chloro-2,6-diethylaniline), and diethyltoluenediamine.

The present invention [3] includes the polyurethane resin described in the above-described [1] or [2], wherein the bis(isocyanatomethyl)cyclohexane includes a 1,4-bis(isocyanatomethyl)cyclohexane.

The present invention [4] includes the polyurethane resin described in the above-described [1] or [2], wherein the macropolyol is a polyether polyol and/or a polyester polyol.

The present invention [5] includes an elastic molded article including the polyurethane resin described in the above-described [1] or [2].

The present invention [6] includes a method for producing a polyurethane resin including a step of obtaining a polyisocyanate component including a prepolymer composition including an isocyanate group-terminated prepolymer and a free polyisocyanate monomer by reacting a bis(isocyanatomethyl)cyclohexane with a macropolyol having a number average molecular weight of 800 or more and 1800 or less so that an isocyanate group of the bis(isocyanatomethyl)cyclohexane is excessive with respect to a hydroxyl group of the macropolyol, and a step of obtaining a polyurethane resin including a reaction product obtained by reacting the polyisocyanate component with a chain extending component, wherein the isocyanate group concentration of the prepolymer composition is above 12% by mass and below 20% by mass, and the chain extending component is an aromatic diamine compound.

### EFFECT OF THE INVENTION

The polyurethane resin of the present invention includes the reaction product of the polyisocyanate component and the chain extending component, and the polyisocyanate component consists of the prepolymer composition including the isocyanate group-terminated prepolymer and the free polyisocyanate monomer; the isocyanate group-terminated prepolymer includes the reaction product of the bis(isocyanatomethyl)cyclohexane and the macropolyol having the number average molecular weight of 800 or more and 1800 or less; the isocyanate group concentration of the prepolymer composition is above 12% by mass and below 20% by mass; and the chain extending component is the aromatic diamine compound.

Therefore, the polyurethane resin of the present invention can improve durability.

The elastic molded article of the present invention includes the above-described polyurethane resin. Therefore, the elastic molded article of the present invention can improve the durability.

Further, according to the method for producing a polyurethane resin of the present invention, it is possible to obtain the polyurethane resin capable of improving the durability.

### DESCRIPTION OF EMBODIMENTS

A polyurethane resin of the present invention includes a reaction product of a polyisocyanate component and a chain extending component. Preferably, the polyurethane resin of the present invention consists of the reaction product of the polyisocyanate component and the chain extending component.

### <Polyisocyanate Components

The polyisocyanate component consists of a prepolymer composition including an isocyanate group-terminated prepolymer and a free polyisocyanate monomer.

The isocyanate group-terminated prepolymer includes the reaction product of a bis(isocyanatomethyl)cyclohexane and a macropolyol. Preferably, the isocyanate group-terminated prepolymer consists of the reaction product of the bis(isocyanatomethyl)cyclohexane and the macropolyol.

### (Bis(isocyanatomethyl)cyclohexane)

Examples of the bis(isocyanatomethyl)cyclohexane include 1,4-bis(isocyanatomethyl)cyclohexane and 1,3-bis(isocyanatomethyl)cyclohexane.

The bis(isocyanatomethyl)cyclohexane preferably includes the 1,4-bis(isocyanatomethyl)cyclohexane. More preferably, the bis(isocyanatomethyl)cyclohexane consists of the 1,4-bis(isocyanatomethyl)cyclohexane.

The 1,4-bis(isocyanatomethyl)cyclohexane (1,4-H₆XDI) has a stereoisomer. Examples of the stereoisomer include cis-1,4-bis(isocyanatomethyl)cyclohexane (hereinafter, referred to as a cis-1,4 isomer) and trans-1,4-bis(isocyanatomethyl)cyclohexane (hereinafter, referred to as a trans-1,4 isomer).

A content ratio of the trans-1,4 isomer is, for example, 50 mol% or more, preferably 60 mol% or more, more preferably 70 mol% or more, further more preferably 80 mol% or more, particularly preferably 85 mol% or more, and for example, 100 mol% or less, preferably 95 mol% or less, more preferably 90 mol% or less, further more preferably 87.5 mol% or less with respect to the total amount of the cis-1,4 isomer and the trans-1,4 isomer.

The 1,4-bis(isocyanatomethyl)cyclohexane is produced by a known method. A method for producing the 1,4-bis(isocyanatomethyl)cyclohexane is described in, for example, International Publications No. 2009/051114 and 2019/069802.

The bis(isocyanatomethyl)cyclohexane may be a modified product as long as it does not inhibit the effect of the present invention. Examples of the modified product include uretdione modified products, isocyanurate modified products, iminooxadiazinediones, biuret modified products, allophanate modified products, polyol adducts, oxadiazinetrione modified products, and carbodiimide modified products. These may be used alone or in combination of two or more. The bis(isocyanatomethyl)cyclohexane is preferably not modified.

### (Macropolyol)

The macropolyol is an organic compound having two or more hydroxyl groups in a molecule, and having a relatively high molecular weight. The relatively high molecular weight shows that a number average molecular weight is above 300. That is, the macropolyol is a high molecular weight polyol.

Examples of the macropolyol include polyether polyols, polyester polyols, polycarbonate polyols, polyurethane polyols, epoxy polyols, vegetable oil polyols, polyolefin polyols, acrylic polyols, and vinyl monomer-modified polyols. These may be used alone or in combination of two or more. As the macropolyol, preferably, a polyether polyol and/or a polyester polyol are/is used.

Examples of the polyether polyol include polyoxyalkylene polyols. Examples of the polyoxyalkylene polyol include polyoxyalkylene (C2-3) polyols and polytetramethylene ether polyols (PTMEG). These may be used alone or in combination of two or more. As the polyether polyol, preferably, a polytetramethylene ether polyol is used.

Examples of the polyester polyol include condensation polyester polyols and open ring polyester polyols. Examples of the condensation polyester polyol include adipate-based polyester polyols and phthalic acid-based polyester polyols. Examples of the adipate-based polyester polyol include polybutylene adipates and polyethylene adipates. Examples of the open ring polyester polyol include lactone-based polyester polyols. Examples of the lactone-based polyester polyol include polycaprolactone polyols. These may be used alone or in combination of two or more. As the polyester polyol, preferably, a polyethylene adipate and a polycaprolactone polyol are used.

The number average molecular weight of the macropolyol is 800 or more, preferably 900 or more, more preferably 950 or more, further more preferably 975 or more. Further, the number average molecular weight of the macropolyol is, for example, 1800 or less, preferably 1500 or less, more preferably 1250 or less, further more preferably 1100 or less, particularly preferably 1050 or less. When the number average molecular weight of the macropolyol is below the above-described lower limit or above the above-described upper limit, the polyurethane resin cannot improve durability.

The macropolyol has a single molecular weight distribution. That is, the macropolyol is preferably used alone. In addition, the macropolyol may have the plurality of macropolyols having the single molecular weight distribution in combination. In this case, the macropolyol has the plurality of macropolyols having the single molecular weight distribution in combination within a range of the number average molecular weight of the macropolyol described above. In other words, in a case where the macropolyol has the plurality of macropolyols each having the single molecular weight distribution in combination, even when the number average molecular weight obtained by summing up the plurality of macropolyols is within the above-described range, the macropolyol which is below the above-described lower limit or above the above-described upper limit of the number average molecular weight of the above-described macropolyol is not included.

When the macropolyol includes the polyether polyol, the content ratio of the polyether polyol is, for example, 50% by mass or more, preferably 70% by mass or more, more preferably 90% by mass or more, particularly preferably 100% by mass with respect to the total amount of the macropolyol. In other words, the macropolyol particularly preferably consists of the polyether polyol.

When the macropolyol includes the polyester polyol, the content ratio of the polyester polyol is, for example, 50% by mass or more, preferably 70% by mass or more, more preferably 90% by mass or more, particularly preferably 100% by mass with respect to the total amount of the macropolyol. In other words, the macropolyol particularly preferably consists of the polyester polyol.

When the macropolyol has the polyether polyol and the polyester polyol in combination, the content ratio of these is appropriately set in accordance with its purpose and applications.

### (Method for Producing Isocyanate Group-Terminated Prepolymer (Prepolymer Composition))

The isocyanate group-terminated prepolymer is synthesized in a step of obtaining the polyisocyanate component including the prepolymer composition including the isocyanate group-terminated prepolymer and the free polyisocyanate monomer by reacting the bis(isocyanatomethyl)cyclohexane and the macropolyol so that an isocyanate group of the bis(isocyanatomethyl)cyclohexane is excessive with respect to a hydroxyl group of the macropolyol.

In the step of obtaining the polyisocyanate component, the bis(isocyanatomethyl)cyclohexane and the macropolyol are reacted, thereby synthesizing the isocyanate group-terminated prepolymer.

Specifically, the above-described bis(isocyanatomethyl)cyclohexane and the above-described macropolyol are mixed to be reacted.

As a method for reacting the bis(isocyanatomethyl)cyclohexane with the macropolyol, a known polymerization method (for example, bulk polymerization and solution polymerization) is selected. Preferably, bulk polymerization is used.

In this reaction, a mixing ratio of the bis(isocyanatomethyl)cyclohexane and the macropolyol is adjusted so that the isocyanate group of the bis(isocyanatomethyl)cyclohexane is excessive with respect to the hydroxyl group of the macropolyol.

Specifically, an equivalent ratio R1 (isocyanate group/active hydrogen group) of the isocyanate group in the bis(isocyanatomethyl)cyclohexane to the hydroxyl group in the macropolyol is above 1, for example, 2.0 or more, preferably 2.5 or more, more preferably 3.0 or more, further more preferably 3.5 or more, particularly preferably 4.0 or more, especially preferably 4.25 or more, most preferably 4.5 or more, and for example, 11.0 or less, preferably 8.0 or less, more preferably 7.0 or less, further more preferably 6.0 or less, particularly preferably 5.5 or less. A terminal functional group of the reaction product obtained in such a case is the isocyanate group. In other words, the isocyanate group-terminated prepolymer is obtained.

As reaction conditions, a reaction temperature is, for example, 20°C or more, and for example, 1500°C or less. Further, reaction time is 1 hour or more, and for example, 20 hours or less.

In the reaction of the bis(isocyanatomethyl)cyclohexane with the macropolyol, a known urethanization catalyst may be added as needed. In the above-described reaction, preferably, the urethanization catalyst is added. Examples of the urethanization catalyst include amines, organic metal compounds, and potassium salts. These urethanization catalysts may be used alone or in combination of two or more. As the urethanization catalyst, preferably, an organic metal compound is used, more preferably, an organotin compound is used, further more preferably, a dibutyltin dilaurate (DBTDL) is used.

Thus, an isocyanate group-terminated prepolymer which is the reaction product of the bis(isocyanatomethyl)cyclohexane and the macropolyol (specifically, a reaction solution of the isocyanate group-terminated prepolymer) is obtained.

Then, the isocyanate group-terminated prepolymer is a polyurethane prepolymer having at least one (preferably, a plurality of, and further more preferably, two) free isocyanate group(s) at its molecular terminal.

In the isocyanate group-terminated prepolymer, an average functionality of the isocyanate group is, for example, 1.5 or more, preferably 1.9 or more, and for example, 3.0 or less, preferably 2.5 or less. In the isocyanate group-terminated prepolymer, the average functionality of the isocyanate group is particularly preferably 2.

In addition, in the reaction of the bis(isocyanatomethyl)cyclohexane with the macropolyol, the reaction is carried out so that the isocyanate group of the bis(isocyanatomethyl)cyclohexane is excessive with respect to the hydroxyl group of the macropolyol, and therefore, a monomer of the free bis(isocyanatomethyl)cyclohexane (that is, the free (unreacted) polyisocyanate monomer) is included in the reaction solution of the isocyanate group-terminated prepolymer. That is, the reaction solution of the isocyanate group-terminated prepolymer is the prepolymer composition including the isocyanate group-terminated prepolymer and the free polyisocyanate monomer.

The isocyanate group-terminated prepolymer content is, for example, 60% by mass or more, preferably 70% by mass or more with respect to the polyisocyanate component.

In addition, the unreacted free polyisocyanate monomer content is, for example, 40% by mass or less, preferably 30% by mass or less with respect to the polyisocyanate component. The unreacted free polyisocyanate monomer content can be, for example, determined by HPLC measurement.

The isocyanate group content in the prepolymer composition (that is, isocyanate group concentration) is, for example, above 12% by mass, preferably 13% by mass or more, more preferably 14% by mass or more, further more preferably 15% by mass or more, particularly preferably 15.6% by mass or more, and for example, below 20% by mass, preferably 19% by mass or less, more preferably 18.5% by mass or less, further more preferably 18% by mass or less. When the above-described isocyanate group concentration is the above-described lower limit or less or the above-described upper limit or more, the polyurethane resin of the present invention cannot improve the durability. The isocyanate group content can be determined by a known measurement method. Examples of the measurement method include a titration method by di-n-butylamine and FT-IR spectrometry.

Further, the isocyanate group equivalent of the prepolymer composition is, for example, 210 or more, preferably 233 or more, and for example, 351 or less, preferably 270 or less. The isocyanate group equivalent is the same as the amine equivalent, and can be determined by a method A or a method B of JIS K 1603-1 (2007).

In synthesis of the isocyanate group-terminated prepolymer, another polyisocyanate other than the bis(isocyanatomethyl)cyclohexane (H₆XDI) and/or the low molecular weight polyol can be also reacted with H₆XDI and the macropolyol as long as it does not inhibit the effect of the present invention. In such a case, the prepolymer composition includes the reaction product of the other polyisocyanate and the low molecular weight polyol along with the reaction product of H₆XDI and the macropolyol.

Examples of the other polyisocyanate include polyisocyanates excluding the bis(isocyanatomethyl)cyclohexane.

Examples of the other polyisocyanate include aliphatic polyisocyanates, alicyclic polyisocyanates (excluding the bis(isocyanatomethyl)cyclohexane), aromatic polyisocyanates, and araliphatic polyisocyanates.

Examples of the aliphatic polyisocyanate include pentamethylene diisocyanate (PDI) and hexamethylene diisocyanate (HDI). Examples of the alicyclic polyisocyanate include isophorone diisocyanate (IPDI), norbornene diisocyanate (NBDI), and methylenebis(cyclohexyl isocyanate) (H₁₂MDI). Examples of the aromatic polyisocyanate include tolylene diisocyanate (TDI), diphenylmethane diisocyanate (MDI), toluidine diisocyanate (TODI), and naphthalene diisocyanate (NDI). Examples of the araliphatic polyisocyanate include xylylene diisocyanate (XDI), and tetramethylxylylene diisocyanate (TMXDI). Further, the other polyisocyanate may be the monomer, or may be the above-described modified product. These may be used alone or in combination of two or more.

The content ratio of the other polyisocyanate is, for example, 50 parts by mass or less, preferably 30 parts by mass or less, more preferably 10 parts by mass or less, particularly preferably 0 parts by mass with respect to 100 parts by mass of the bis(isocyanatomethyl)cyclohexane.

The low molecular weight polyol is an organic compound having two or more hydroxyl groups in the molecule and having a relatively low molecular weight. The relatively low molecular weight shows that the number average molecular weight is 300 or less.

The low molecular weight polyol includes, for example, a low molecular weight diol having 2 to 6 carbon atoms.

Examples of the low molecular weight diol having 2 to 6 carbon atoms include alkane diols having 2 to 6 carbon atoms, ether diols having 2 to 6 carbon atoms, and alkene diols having 2 to 6 carbon atoms. Examples of the alkane diol having 2 to 6 carbon atoms include ethylene glycol, propylene glycol, 1,3-propanediol, 1,4-butanediol (1,4-BG), 1,3-butanediol (1,3-BG), 1,2-butanediol, 1,5-pentanediol, 1,6-hexanediol, neopentyl glycol, 3-methyl-1,5-pentanediol, and 2,2-dimethyl-1,3-propanediol. Examples of the ether diol having 2 to 6 carbon atoms include diethylene glycol (DEG), triethylene glycol, and dipropylene glycol. An example of the alkene diol having 2 to 6 carbon atoms includes 1,4-dihydroxy-2-buten. These may be used alone or in combination of two or more.

The polyurethane resin may be foamed and used, for example, as polishing pad applications. In this case, in order to facilitate foaming, the low molecular weight polyol such as diethylene glycol may be preferably used in combination along with the macropolyol.

The content ratio of the low molecular weight polyol is, for example, 50 parts by mass or less, preferably 30 parts by mass or less, more preferably 10 parts by mass or less, particularly preferably 0 parts by mass with respect to 100 parts by mass of the macropolyol.

That is, in the prepolymer composition, the isocyanate group-terminated prepolymer is the reaction product of the bis(isocyanatomethyl)cyclohexane (H₆XDI) and the macropolyol, and the free polyisocyanate monomer is the H₆XDI monomer.

### <Chain Extending Components

The chain extending component is the aromatic diamine compound.

Examples of the aromatic diamine compound include 4,4'-diphenylmethanediamine, 3,3'-dichloro-4,4'-diphenylmethanediamine (hereinafter, may be referred to as 4,4'-methylenebis(2-chloroaniline) (MOCA)), diethyltoluenediamine (DETDA), dimethylthiotoluenediamine, 4,4'-methylenebis(3-chloro-2,6-diethylaniline) (MCDEA), N,N'-di-sec-butyl-para-phenylenediamine, 4,4'-bis(sec-butylamino)diphenylmethane, 4,4'-bis(methylamino)diphenylmethane, trimethylene-bis(4-aminobenzoate), polytetramethylene oxide-di-p-aminobenzoate, N-phenyl-N'-isopropyl-p-phenylenediamine, and N-phenyl-N'-(1,3-dimethylbutyl)-p-phenylenediamine. Examples of the diethyltoluenediamine include 2,4-diethyltoluenediamine and 2,6-diethyltoluenediamine. Examples of the dimethylthiotoluenediamine include 3,5-bis(methylthio)-2,6-toluenediamine and 3,5-bis(methylthio)-2,4-toluenediamine.

Examples of the aromatic diamine compound include commercially available products, and more specifically, examples thereof include ETHACURE 100 (trade name, DETDA, manufactured by Albemarle Corporation) and ETHACURE 300 (trade name, dimethylthiotoluenediamine, manufactured by Albemarle Corporation).

These aromatic diamine compounds may be used alone or in combination of two or more.

As the aromatic diamine compound, preferably, 3,3'-dichloro-4,4'-diphenylmethanediamine, dimethylthiotoluenediamine, 4,4'-methylenebis(3-chloro-2,6-diethylaniline), and diethyltoluenediamine are used, more preferably, 3,3'-dichloro-4,4'-diphenylmethanediamine, dimethylthiotoluenediamine, and diethyltoluenediamine are used.

### (Method for Producing Polyurethane Resin)

The polyurethane resin is obtained in a step of obtaining the polyurethane resin including the reaction product obtained by reacting the polyisocyanate component with the chain extending component.

In the step of obtaining the polyurethane resin, the polyisocyanate component and the chain extending component are mixed, and the polyisocyanate component and the chain extending component are reacted (extending reaction), thereby obtaining the polyurethane resin as the reaction product of these. That is, the polyurethane resin consists of the reaction product of these.

The mixing ratio of the polyisocyanate component and the chain extending component is adjusted so that an equivalent ratio R2 (amino group/isocyanate group) of the isocyanate group of the isocyanate group-terminated prepolymer to the amino group in the chain extending component is, for example, 0.8 or more, preferably 0.9 or more, more preferably 0.925 or more, and for example, 1.30 or less, preferably 1.20 or less, more preferably 1.10 or less, further more preferably 1 or less, particularly preferably 0.975 or less. The equivalent ratio R2 is particularly preferably 0.95.

In addition, in the above-described reaction, the reaction temperature is, for example, 25°C or more, preferably 50°C or more, and for example, 200°C or less, preferably 150°C or less. Further, the reaction time is, for example, 5 minutes or more, preferably 1 hour or more, more preferably 8 hours or more, further more preferably 12 hours or more, and for example, 72 hours or less, preferably 48 hours or less, more preferably 24 hours or less.

Thus, the polyisocyanate component and the chain extending component are reacted, thereby producing the polyurethane resin.

In addition, in this method, if necessary, the polyurethane resin may be subjected to a heat treatment. A heat treatment temperature is, for example, 50°C or more, preferably 80°C or more, more preferably 100°C or more, and for example, 200°C or less, preferably 150°C or less. Further, heat treatment time is, for example, 30 minutes or more, preferably 1 hour or more, and for example, 30 hours or less, preferably 20 hours or less.

Further, it is also possible to subject the polyurethane resin to aging. An aging temperature is, for example, 10°C or more, preferably 20°C or more, and for example, 50°C or less, preferably 40°C or less. Further, aging time is, for example, 1 hour or more, preferably 10 hours or more, and for example, 50 days or less, preferably 30 days or less.

The polyurethane resin may also include a known additive as needed. Examples of the additive include antioxidants, heat-resistant stabilizers, light-resistant stabilizers, ultraviolet absorbers, anti-blocking agents, mold release agents, pigments, dyes, lubricants, fillers, hydrolysis inhibitors, anti-rust agents, and bluing agents. An addition amount of the additive is appropriately set in accordance with its purpose and applications.

The timing of adding the additive is not particularly limited. For example, in the step of obtaining the polyisocyanate component, the additive may be also added when the isocyanate group-terminated prepolymer is synthesized and/or after the isocyanate group-terminated prepolymer is synthesized. In addition, in the step of obtaining the polyurethane resin, the additive may be also added to the polyisocyanate component and/or the chain extending component. Then, in the step of obtaining the polyurethane resin, the additive may be also added to a mixture of the polyisocyanate component and the chain extending component.

Then, the above-described polyurethane resin can be preferably used in a production of an elastic molded article.

### <Elastic Molded Article>

The elastic molded article of the present invention includes the polyurethane resin.

Examples of the elastic molded article include polyurethane elastomers. Examples of the polyurethane elastomer include TPU (thermoplastic polyurethane resin) and TSU (thermosetting polyurethane resin). As the elastic molded article, preferably, TSU (thermosetting polyurethane resin) is used.

The elastic molded article is obtained by molding the polyurethane resin by a known molding method.

An example of the molding method includes cast molding. Further, examples of a shape after molding include plate-like, fibrous, strand-like, film-like, sheet-like, pipe-like, bottle-like, hollow, box-like, and button-like. The elastic molded article is preferably obtained by the cast molding. Therefore, the elastic molded article is preferably a cast polyurethane elastomer.

Such a cast polyurethane elastomer is, for example, obtained by, if necessary, defoaming the mixture of the polyisocyanate component and the chain extending component, pouring it into a preheated mold, and thereafter, curing and demolding the resulting product in the production of the above-described polyurethane resin.

A thickness of the elastic molded article is, for example, 1 cm or more, preferably 2 cm or more, and for example, 20 cm or less, preferably 10 cm or less.

Then, the cast polyurethane elastomer is the molded article (cast molded article) obtained by the cast molding, is an article having a predetermined shape by itself in accordance with its purpose and applications, and is distinguished from the coating agent which is coated onto an object to be coated.

The elastic molded article includes the above-described polyurethane resin. Therefore, the elastic molded article can improve the durability. The durability includes deflection suppression, low heat generation, softening suppression at 50°C to 100°C, and elongation (elongation at break).

### <Function and Effect>

The above-described polyurethane resin includes the reaction product of the polyisocyanate component and the chain extending component; the polyisocyanate component consists of the prepolymer composition including the isocyanate group-terminated prepolymer and the free polyisocyanate monomer; the isocyanate group-terminated prepolymer includes the reaction product of the bis(isocyanatomethyl)cyclohexane and the macropolyol having the number average molecular weight of 800 or more and 1800 or less; the isocyanate group concentration of the prepolymer composition is above 12% by mass and below 20% by mass; and the chain extending component is the aromatic diamine compound. Therefore, the polyurethane resin can improve the durability (the deflection suppression, the low heat generation, the softening suppression at 50°C to 100°C, and the elongation (elongation at break).

On the other hand, in the above-described polyurethane resin, when the number average molecular weight of the macropolyol is below 800, the effect of the softening suppression at 50°C to 100°C cannot be obtained.

In addition, in the above-described polyurethane resin, when the number average molecular weight of the macropolyol is above 1800, the effect of the deflection suppression cannot be obtained.

In addition, in the above-described polyurethane resin, when the isocyanate group concentration of the prepolymer composition is 12% by mass or less, the effect of the deflection suppression and the softening suppression at 50°C to 100°C cannot be obtained.

In addition, in the above-described polyurethane resin, when the isocyanate group concentration of the prepolymer composition is 20% by mass or more, the effect of the elongation (elongation at break) cannot be obtained.

In addition, in the above-described polyurethane resin, when the chain extending component is not the aromatic diamine compound, the effect of the deflection suppression cannot be obtained.

In addition, in the above-described polyurethane resin, when the number average molecular weight of the macropolyol is below 800, and when the isocyanate group concentration of the prepolymer composition is 12% by mass or less, the effect of the deflection suppression, the softening suppression at 50°C to 100°C, and the low heat generation cannot be obtained.

In the above-described polyurethane resin, when the number average molecular weight of the macropolyol is 800 or more and 1800 or less, and the isocyanate group concentration of the prepolymer composition is above 12% by mass and below 20% by mass, it is possible to improve the deflection suppression, the low heat generation, the softening suppression at 50°C to 100°C, and the elongation (elongation at break).

The elastic molded article of the present invention includes the above-described polyurethane resin. Therefore, the elastic molded article of the present invention can improve the durability.

Further, according to the method for producing a polyurethane resin of the present invention, it is possible to obtain the polyurethane resin capable of improving the durability.

### <Applications>

The above-described polyurethane resin and the above-described elastic molded article are the polyurethane resin capable of improving the durability as described above. Therefore, these are preferably used in various industrial fields. Specifically, examples of the applications of these include polishing pads, transparent hard plastics, waterproof agents, potting agents, ink, binders, films, sheets, bands, belts, shoe press belts, tubes, rollers, mecanum rolls, blades, speakers, sensors, outsoles, threads, fibers, non-woven fabrics, cosmetics, shoe products, heat insulation materials, sealing materials, tape materials, sealing materials, solar power generation members, robotic members, android members, wearable members, clothing, sanitary products, cosmetic supplies, furniture, food packaging members, sporting goods, leisure goods, medical products, nursing care products, housing members, acoustic members, lighting members, vibration proofing members, soundproofing members, daily necessities, miscellaneous goods, cushions, bedding materials, stress-absorbing materials, stress relievers, automobile interior materials, automobile exterior materials, railroad materials, aircraft parts, optical members, OA equipment members, miscellaneous goods surface-protection materials, semiconductor sealing materials, self-healing materials, healthcare equipment, eyeglasses lenses, toys, packings, cable sheaths, wire harnesses, telecommunication cables, automotive wirings, computer wirings, industrial goods, impact absorbers, semiconductor goods, various members for wet blasting machines, bump stopper materials, embossing roll materials for water extraction, blade materials for wind power generation, and bridge bearings. The above-described polyurethane resin and the above-described elastic molded article are preferably used for polishing pads.

### Examples

Next, the present invention is further described based on Examples below. The present invention is however not limited by Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS". All designations of "part" or "parts" and "%" mean part or parts by mass and % by mass, respectively, unless otherwise particularly specified.

### < Synthesis of 1,4-bis(isocyanatomethyl)cyclohexane>

### Production Example 1

A 1,4-bis(isocyanatomethyl)cyclohexane (1,4-H₆XDI) was obtained in conformity with the description of Production Example 3 described in International Publication No. 2019/069802. The purity of the 1,4-H₆XDI was measured by gas chromatography, and the result was 99.9%. Also, the hue by APHA measurement was 5. Further, the ratio of the trans-isomer to the cis-isomer measured by ¹³C-NMR measurement was 86 mol% of the trans-isomer and 14 mol% of the cis-isomer.

### <Production of Polyurethane Resin and Elastic Molded Article>

Examples 1 to 10 and Comparative Examples 1 to 10

### [Step of Obtaining Polyisocyanate Component]

Each of the polyisocyanates and the macropolyols described in Tables, and each of the urethanization catalysts (organic metal catalyst (DBTDL)) based on the mixing formulations described in Tables were reacted at 80°C under a nitrogen atmosphere until the isocyanate group concentration reached each of the values described in Tables. The mixing ratio of the polyisocyanate and the macropolyol was adjusted so that the equivalent ratio R1 (isocyanate group/hydroxyl group) of the isocyanate group in the polyisocyanate component to the hydroxyl group in the polyol component was the each of the values described in Tables. Thus, the isocyanate group-terminated prepolymer was synthesized, thereby obtaining the reaction solution including the isocyanate group-terminated prepolymer. Next, 0.5% by mass of a hindered phenol-based antioxidant (trade name: Irganox 1076, manufactured by BASF SE) and 0.3% by mass of a phosphite ester-based antioxidant (trade name: JPP-100, manufactured by Johoku Chemical Industry) were added to the reaction solution. Thus, the polyisocyanate component (prepolymer composition) was obtained.

Each urethanization catalyst content described in Tables means the organic metal catalyst content with respect to the isocyanate group-terminated prepolymer.

### [Step of Obtaining Polyurethane Resin]

The above-described polyisocyanate component and each of the chain extending components described in Tables were mixed at the equivalent ratio R2 (NH₂/NCO) ratio of the amino group in the chain extending component to the isocyanate group of the polyisocyanate component, thereby obtaining the mixture of the polyisocyanate component and the chain extending component. The mixture was cast into a mold which was preheated at 110°C, and cured under each of the curing conditions described in Tables to be then demolded, thereby obtaining a urethane resin cured product. Thus, the elastic molded article was produced.

### <Evaluation>

### [D Hardness] (Deflection Suppression)

The D hardness of each of the elastic molded articles of Examples and Comparative Examples was measured in conformity with JIS K 7312 (1996). The results are shown in Tables 1 to 4.

### [Tensile Properties (Tensile Strength and Elongation at Break)] (Elongation (Elongation at Break))

The tensile properties of each of the elastic molded articles of Examples and Comparative Examples were measured in conformity with JIS K 7312 (1996) with a universal tensile testing machine (205N, manufactured by INTESCO co., ltd.). That is, the elastic molded article was cut, thereby obtaining a No. 3 dumbbell test piece. Then, the tensile strength (MPa) and the elongation at break (%) were measured under the conditions of a tensile rate of 500 mm/min. The results are shown in Tables 1 to 4.

### [E' (Storage Elastic Modulus)] (Deflection Suppression)

A dynamic viscoelasticity spectrum of the elastic molded article was measured under the conditions of a measurement starting temperature of -100°C, a temperature rising rate of 5°C/min, a tensile mode, a gauge length of 20 mm, a static/dynamic stress ratio of 1.8, and a measurement frequency of 10 Hz using a dynamic viscoelasticity measurement device (manufactured by IT KEISOKU SEIGYO, model: DVA-220). Then, E' at 50°C (E' @50°C) and E' at 100°C (E' @100°C) were calculated. The ratio of E' @100°C/E' @50°C was calculated as a reference of the softening suppression at 50°C to 100°C. The results are shown in Tables 1 to 4.

### [tanδ (Loss Factor)] (Low Heat Generation)

As the reference of the low heat generation, the loss factor (tanδ) of each of the elastic molded articles in Examples and Comparative Examples was calculated. More specifically, in the above-described dynamic viscoelasticity spectrum, the loss factor (tanδ) at 50°C and 100°C was calculated (tanδ @50°C and tanδ @100°C, respectively). The ratio of tanδ @100°C/tanδ @50°C was calculated as the reference of the softening suppression at 50°C to 100°C. The results are shown in Tables 1 to 4.

Since Comparative Example 9 was judged to be inappropriate due to the low value of the elongation at break, it was not possible to measure E' (storage elastic modulus) and tanδ @100°C.

### [Table 1]

**Table 1**

| | | Ex. 1 | Ex. 2 | Ex. 3 | Ex. 4 | Ex. 5 | Ex. 6 |
|---|---|---|---|---|---|---|---|
| Prepolymer Composition | Polyisocyanate | 1,4-H6XDI | 1,4-H6XDI | 1,4-H6XDI | 1,4-H₆XDI | 1,4-H6XDI | 1,4-H6XDI |
| | Macropolyol | PTMEG (Number Average Molecular Weight of 1000) | PTMEG (Number Average Molecular Weight of 1000) | PCL (Number Average Molecular Weight of 1000) | Polyethylene Adipate (Number Average Molecular Weight of 1000) | PTMEG (Number Average Molecular Weight of 1000) | PTMEG (Number Average Molecular Weight of 1000) |
| | Urethanization Catalyst | Absence | Absence | Absence | Absence | Absence | Absence |
| | Synthesis R1 (NCO/OH) | 4.5 | 5.5 | 5.5 | 5.5 | 5.5 | 4.5 |
| | NCO% | 15.6 | 18.0 | 18.0 | 18.0 | 18.0 | 15.6 |
| Mixing Conditions | R2 (NH₂/NCO) | 0.95 | 0.95 | 0.95 | 0.95 | 0.95 | 0.95 |
| | Chain Extending Component | MOCA | MOCA | MOCA | MOCA | E-100 | E300 |
| Curing Conditions | Curing Temperature (°C) | 110 | 110 | 110 | 110 | 110 | 110 |
| | Time (hour) | 16 | 16 | 16 | 16 | 16 | 16 |
| Durability | D Hardness | 74 | 77 | 77 | 77 | 75 | 67 |
| | Tensile Strength (Mpa) | 51 | 54 | 53 | 53 | 60 | 39 |
| | Elongation at Break (%) | 133 | 77 | 60 | 65 | 100 | 199 |
| | E' @50°C (Mpa) | 745 | 1002 | 1100 | 1070 | 920 | 535 |
| | E' @100°C (Mpa) | 454 | 699 | 720 | 710 | 650 | 409 |
| | Ratio of E' @100°C/E' @50°C | 0.61 | 0.70 | 0.65 | 0.66 | 0.71 | 0.76 |
| | tanδ @50°C | 0.071 | 0.065 | 0.080 | 0.080 | 0.065 | 0.067 |
| | tanδ @100°C | 0.070 | 0.062 | 0.070 | 0.070 | 0.062 | 0.050 |
| | Ratio of tanδ @100°C/tanδ @50°C | 0.98 | 0.95 | 0.88 | 0.88 | 0.95 | 0.75 |

### [Table 2]

**Table 2**

| | | Ex. 7 | Ex. 8 | Ex. 9 | Ex. 10 | Comparative Ex. 1 | Comparative Ex. 2 | Comparative Ex. 3 |
|---|---|---|---|---|---|---|---|---|
| Prepolymer Composition | Polyisocyanate | 1,4-H₆XDI | 1,4-H₆XDI | 1,4-H₆XDI | 1,4-H₆XDI | T-80 | T-100 | T-100 |
| | Macropolyol | PTMEG (Number Average Molecular Weight of 1000) | PTMEG (Number Average Molecular Weight of 1000) | PTMEG (Number Average Molecular Weight of 1000) | PTMEG (Number Average Molecular Weight of 1000) | PTMEG 1000/1,3-BG | PTMEG 1000/DEG | PTMEG 1000/DEG |
| | Urethanization Catalyst | Absence | Absence | Absence | Absence | Absence | Absence | Absence |
| | Synthesis R1 (NCO/OH) | 5.5 | 3.7 | 4.5 | 4.5 | 2.0 | 2.0 | 1.7 |
| | NCO% | 18.0 | 13.0 | 15.6 | 15.6 | 9.5 | 9.5 | 8.6 |
| Mixing Conditions | R2 (NH₂/NCO) | 0.95 | 0.95 | 0.95 | 0.95 | 0.95 | 0.95 | 0.95 |
| | Chain Extending Component | E300 | MCDEA | MOCA | E300 | MOCA | MOCA | MOCA |
| Curing Conditions | Curing Temperature (°C) | 110 | 110 | 80 | 80 | 110 | 110 | 110 |
| | Time (hour) | 16 | 16 | 16 | 16 | 16 | 16 | 16 |
| Durability | D Hardness | 70 | 70 | 74 | 67 | 72 | 72 | 73 |
| | Tensile Strength (Mpa) | 39 | 45 | 50 | 37 | 61 | 54 | 55 |
| | Elongation at Break (%) | 120 | 220 | 210 | 330 | 267 | 243 | 234 |
| | E' @50°C (Mpa) | 730 | 530 | 680 | 510 | 496 | 497 | 685 |
| | E' @100°C (Mpa) | 560 | 410 | 420 | 370 | 209 | 132 | 148 |
| | Ratio of E' @100°C/E' @50°C | 0.77 | 0.77 | 0.62 | 0.73 | 0.42 | 0.27 | 0.22 |
| | tanS @50°C | 0.067 | 0.069 | 0.080 | 0.078 | 0.114 | 0.124 | 0.118 |
| | tanδ @100°C | 0.050 | 0.055 | 0.065 | 0.060 | 0.113 | 0.220 | 0.268 |
| | Ratio of tanδ @100°C/tanδ @50°C | 0.75 | 0.80 | 0.81 | 0.77 | 0.99 | 1.78 | 2.28 |

### [Table 3]

**Table 3**

| | | Comparative Ex. 4 | Comparative Ex. 5 | Comparative Ex. 6 | Comparative Ex. 7 |
|---|---|---|---|---|---|
| Prepolymer Composition | Polyisocyanate | 1,4-H₆XDI | 1,4-H₆XDI | 1,4-H₆XDI | 1,4-H₆XDI |
| | Macropolyol | PTMEG (Number Average Molecular Weight of 650 | PTMEG (Number Average Molecular Weight of 650) | PTMEG (Number Average Molecular Weight of 1000) | PTMEG (Number Average Molecular Weight of 1000) |
| | Urethanization Catalyst | Absence | Absence | DBTDL/ 300ppm | DBTDL/ 300ppm |
| | Synthesis R1 (NCO/OH) | 2.7 | 3.5 | 4.5 | 5.5 |
| | NCO% | 12.0 | 15.6 | 15.6 | 18.0 |
| Mixing Conditions | R2 (NH₂/NCO) | 0.95 | 0.95 | 0.95 | 0.95 |
| | Chain Extending Component | MOCA | MOCA | 1,4-BG | 1,4-BG |
| Curing Conditions | Curing Temperature (°C) | 110 | 110 | 110 | 110 |
| | Time (hour) | 16 | 16 | 16 | 16 |
| Durability | D Hardness | 70 | 78 | 54 | 58 |
| | Tensile Strength (Mpa) | 49 | 51 | 47 | 54 |
| | Elongation at Break (%) | 160 | 77 | 619 | 568 |
| | E' @50°C (Mpa) | 493 | 968 | 181 | 208 |
| | E' @100°C (Mpa) | 111 | 399 | 153 | 165 |
| | Ratio of E' @100°C/E' @50°C | 0.22 | 0.41 | 0.84 | 0.79 |
| | tanδ @50°C | 0.135 | 0.071 | 0.063 | 0.073 |
| | tanδ @100°C | 0.298 | 0.141 | 0.030 | 0.027 |
| | Ratio of tanδ @100°C/tanδ @50°C | 2.21 | 2.00 | 0.48 | 0.37 |

### [Table 4]

**Table 4**

| | | Comparative Ex. 8 | Comparative Ex. 9 | Comparative Ex. 10 |
|---|---|---|---|---|
| Prepolymer Composition | Polyisocyanate | 1,4-H6XDI | 1,4-H6XDI | 1,4-H6XDI |
| | Macropolyol | PTMEG (Number Average Molecular Weight of 1000) | PTMEG (Number Average Molecular Weight of 1000) | PTMEG (Number Average Molecular Weight of 2000) |
| | Urethanization Catalyst | Absence | Absence | Absence |
| | Synthesis R1 (NCO/OH) | 3.4 | 6.4 | 7.5 |
| | NCO% | 12.0 | 20.0 | 15.6 |
| Mixing Conditions | R2 (NH₂/NCO) | 0.95 | 0.95 | 0.95 |
| | Chain Extending Component | MOCA | MOCA | MOCA |
| Curing Conditions | Curing Temperature (°C) | 110 | 110 | 110 |
| | Time (hour) | 16 | 16 | 16 |
| Durability | D Hardness | 65 | 82 | 61 |
| | Tensile Strength (Mpa) | 43 | 50 | 40 |
| | Elongation at Break (%) | 160 | 30 | 138 |
| | E' @50°C (Mpa) | 420 | - | 204 |
| | E' @100°C (Mpa) | 204 | - | 156 |
| | Ratio of E' @100°C/E' @50°C | 0.49 | - | 0.76 |
| | tanδ @50°C | 0.098 | 0.070 | 0.076 |
| | tanδ @100°C | 0.135 | - | 0.065 |
| | Ratio of tanδ @100°C/tanδ @50°C | 1.38 | - | 0.86 |

The details of abbreviations in Tables are described below.
1,4-H₆HDI: 1,4-bis(isocyanatomethyl)cyclohexane
T-80: COSMONATE T-80 (trade name, tolylene diisocyanate)
T-100: COSMONATE T-100 (trade name, toluene-2,4-diisocyanate)
PTMEG: polytetramethylene ether glycol
DEG: diethylene glycol
PCL: polycaprolactonediol, number average molecular weight (Mn) of 1000
1,4-BG: 1.4-butanediol
1,3-BG: 1,3-butanediol
MOCA: 4,4'-methylenebis(2-chloroaniline)
E-100: ETHACURE 100 (trade name, diethyltoluenediamine)
E-300: ETHACURE 300 (trade name: dimethylthiotoluenediamine)
MCDEA: 4,4'-methylenebis(3-chloro-2,6-diethylaniline)
DBTDL: dibutyltin dilaurate

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The polyurethane resin, the elastic modulus article, and the method for producing a polyurethane resin of the present invention are preferably used in various industrial fields.

## Claims

1. A polyurethane resin comprising:
a reaction product of a polyisocyanate component and a chain extending component, wherein
the polyisocyanate component consists of a prepolymer composition including an isocyanate group-terminated prepolymer and a free polyisocyanate monomer;
the isocyanate group-terminated prepolymer includes the reaction product of a bis(isocyanatomethyl)cyclohexane and a macropolyol having a number average molecular weight of 800 or more and 1800 or less;
the isocyanate group concentration of the prepolymer composition is above 12% by mass and below 20% by mass; and
the chain extending component is an aromatic diamine compound.

2. The polyurethane resin according to claim 1, wherein
the aromatic diamine compound includes at least one kind selected from the group consisting of 3,3'-dichloro-4,4'-diphenylmethanediamine, dimethylthiotoluenediamine, 4,4'-methylenebis(3-chloro-2,6-diethylaniline), and diethyltoluenediamine.

3. The polyurethane resin according to claim 1, wherein
the bis(isocyanatomethyl)cyclohexane includes a 1,4-bis(isocyanatomethyl)cyclohexane.

4. The polyurethane resin according to claim 1, wherein
the macropolyol is a polyether polyol and/or a polyester polyol.

5. An elastic molded article comprising:
the polyurethane resin according to claim 1.

6. A method for producing a polyurethane resin comprising:
a step of obtaining a polyisocyanate component including a prepolymer composition including an isocyanate group-terminated prepolymer and a free polyisocyanate monomer
by reacting a bis(isocyanatomethyl)cyclohexane with a macropolyol having a number average molecular weight of 800 or more and 1800 or less so that an isocyanate group of the bis(isocyanatomethyl)cyclohexane is excessive with respect to a hydroxyl group of the macropolyol, and
a step of obtaining a polyurethane resin including a reaction product obtained by reacting the polyisocyanate component with a chain extending component, wherein
the isocyanate group concentration of the prepolymer composition is above 12% by mass and below 20% by mass, and
the chain extending component is an aromatic diamine compound.
